Europäisches Patentamt

(19) European Patent Office

Office européen des brevets

(11) EP 0 255 660 B2

(12) NEW EUROPEAN PATENT SPECIFICATION

(45) Date of publication and mention
of the opposition decision:
**14.02.1996 Bulletin 1996/07**

(45) Mention of the grant of the patent:
**15.04.1992 Bulletin 1992/16**

(21) Application number: **87110629.0**

(22) Date of filing: **22.07.1987**

(51) Int. Cl.$^6$: **A23D 7/00**, A23L 1/19,
A23C 11/04

(54) **Oil-in-water type emulsified fat or oil composition**

Emulgierte Fett- oder Ölzusammensetzung des Öl-im-Wasser-Typs

Composition de graisse ou d'huile émulsifiée du type huile-dans-eau

(84) Designated Contracting States:
**AT BE CH DE ES FR GB GR IT LI LU NL SE**

(30) Priority: **24.07.1986 JP 174269/86**

(43) Date of publication of application:
**10.02.1988 Bulletin 1988/06**

(73) Proprietor: **ASAHI DENKA KOGYO KABUSHIKI KAISHA**
**Arakawa-ku Tokyo 116 (JP)**

(72) Inventors:
• **Ohtori, Masashi**
**Higashiogu Arakawa-ku Tokyo (JP)**
• **Okutomi, Yasuo**
**Higashiogu Arakawa-ku Tokyo (JP)**
• **Edo, Hiroshi**
**Higashiogu Arakawa-ku Tokyo (JP)**

(74) Representative: **Grünecker, Kinkeldey,**
**Stockmair & Schwanhäusser**
**Anwaltssozietät**
**D-80538 München (DE)**

(56) References cited:
**EP-A- 0 029 937** **US-A- 3 355 298**
**US-A- 4 505 943**

**Description**

BACKGROUND OF THE INVENTION

FIELD OF THE INVENTION

This invention relates to an oil-in-water type emulsified fat or oil composition; more particularly, it relates to a stable oil-in-water type emulsified fat or oil composition wherein neither an oily phase nor an aqueous phase would separate out in thawing even without adding any whey separation inhibitor (colloidal stabilizer) such as sugars or gums thereto.

DESCRIPTION OF THE PRIOR ART

From JP-A-26 439/74 a process for improving the emulsification stability of an oil-in-water type emulsified fat or oil composition in thawing is known which comprises adding gelatin and a starch hydrolyzate to mayonnaise and freezing the obtained mixture together with food. From JP-A-21 064/86 a similar process is known which comprises adding a gum to an oily phase, mixing the resulting oily phase with an aqueous phase containing protein, homogenizing the mixture to give an oil droplet size of 10 to 200 μm and adjusting the pH value thereof to 4,5 or below. However, these processes, wherein whey separation inhibitors such as gelatin, starch hydrolyzate(s) or gum(s) are added in order to inhibit the whey separation in thawing, can not give a product having an excellent texture and a good mouth feel. In addition, these processes can not give a satisfactory effect of inhibiting the whey separation in thawing.

It has been further attempted to obtain an oil-in-water type emulsified fat or oil composition of an excellent textture by adding fat(s) or oil(s) to fresh milk to give a fat or oil content in the whole system of approximately 7 to 25 % and emulsifying and homogenizing the system followed by addition of 2,8 to 6,4 % of milk protein and of an acid thereto to give a sour cream type product (cf. US-A-3 355 298); or by adding fat(s) or oil(s), gelatin protein(s), carbohydrate(s), emulsifier(s), whey separation inhibitor(s) and acid(s) to water or skim milk to thereby give an imitation sour cream (cf. US-A-3 391 002). Although each products thus obtained has an excellent texture, the low milk protein content thereof might cause the severe whey separation when thawing the emulsion.

In JP-B-7 870/79 it has been reported a process for inhibiting the whey separation when thawing an emulsion by using fat(s) or oil(s) containing trans acid(s) as a starting material. However this process is disadvantageous from an economical viewpoint since the fat(s) or oil(s) to be used as a starting material is restricted. In addition, this process can not give a satisfactory effect of inhibiting the whey separation in thawing.

SUMMARY OF THE INVENTION

It is the object of the present invention to provide an oil-in-water type emulsified fat or oil composition which causes no separation of the emulsion in thawing and has an excellent texture and a good mouth feel; and yet is free from any restrictions on the starting fat or oil, and has a good stability of form even if it is left at a room temperature for a long term.

As a result of our studies, we have found that the aimed oil-in-water type emulsified fat or oil composition, which causes no separation of the emulsion in thawing even without adding any whey separation inhibitor such as sugars or gums thereto, can be obtained by adding milk protein in a specific concentration based on water of an aqueous phase and employing specific emulsifier(s). The present invention has been completed based on the above finding.

Subject-matter of the present invention is an oil-in-water type emulsified fat or oil composition which comprises 5 to 45 % by weight of fat(s) or oil(s), 0,1 to 3,0 % by weight of emulsifier(s) selected from among saturated fatty acid monoglycerides, sorbitan fatty acid esters, sucrose fatty acid esters each having a hydrophilic-lipophilic balance (HLB) of at least 7 and lactic acid esters of monoglyceride, water, 7,0 to 18,0 % by weight based on the water of milk protein(s) and acid(s) and has a pH value adjusted to 4,0 to 6.5, with the proviso that whey separation inihibitors are excluded.

Preferred embodiments of the present invention are described in subclaims 2 to 6.

DETAILED DESCRIPTION OF THE INVENTION

Examples of the fats and oils to be used in the present invention are natural ones such as palm oil, soybean oil, rapeseed oil, rice oil, sunflower oil, safflower oil, beef tallow, milk fat, lard, cacao fat, fish oil and whale oil and processed ones obtained by hydrogenating, fractionating and/or transesterifying them. One or more fats or oils may be appropriately selected therefrom for use.

The above fat(s) or oil(s) are used in an amount of 5 to 45 % by weight, preferably 10 to 40 % by weight, especially preferably 20 to 35 % by weight. A content of the fat(s) or oil(s) of less than 5 % by weight would give a poor texture. On the other hand a content thereof exceeding 45 % by weight would give an excessively high viscosity in the production to thereby make the subsequent production procedure impossible.

The emulsifier(s) to be used in the present invention are selected from among saturated fatty acid monoglycerides, sorbitan fatty acid esters, sucrose fatty acid esters each having an HLB of at least 7 and lactic acid esters of monoglyceride.

As the saturated fatty acid monoglycerides as described above, those comprising saturated fatty acid(s) each having 12 to 22 carbon atoms are preferable.

As the sorbitan fatty acid esters as described above, those comprising fatty acid(s) each having 12 to 22 carbon atoms, particularly saturated fatty acid(s) each having 12 to 22 carbon atoms, are preferable.

As the sucrose fatty acid esters as described above, those comprising fatty acid(s) each having 12 to 22 carbon atoms, particularly saturated fatty acid(s) each having 12 to 22 carbon atoms, are preferable.

The emulsifier(s) are incorporated in an amount of 0,1 to 3,0 % by weight, preferably 0,5 to 2,0 % by weight. When the content of the same is less than 1 % by weight, the denaturation of proteins in freezing can not be inhibited, which results in, for example, the aggregation of proteins or the whey separation in thawing. On the other hand, when it exceeds 3,0 % by weight, the obtained product has a poor flavor and a disadvantage from an aconomical point of view, although a satisfactory effect of inhibiting the denaturation of proteins can be achieved thereby.

In the present invention, milk protein(s) in a specific concentration based on water have to be used together with the specific emulsifier(s) as described above. When either of these materials is absent, it is impossible to obtain an oil-in-water type emulsified fat or oil composition which is stable in thawing.

It is particularly effective that the composition of the present invention contains milk protein-containing product(s) such as whole fat milk powder, skim milk powder, fresh cream, skim milk, fresh milk concentrated skim milk, concentrated milk, butter milk powder, butter milk, lactalbumin, calcium, caseinate, sodium caseinate, or mixtures thereof.

The concentration of the milk protein(s) based on water is 7,0 to 18,0 % by weight, preferably 8,0 to 16,0 % by weight. When the concentration thereof is less than 7,0 % by weight, the whey separation in thawing would be observed. On the other hand, when it exceeds 18,0 % by weight, a remarkable increase in the viscosity of the mixture would occur in the production thereof, which makes the subsequent production procedure impossible. The concentration of milk protein(s) based on water of a composition containing milk protein-containing product(s) may be calculated according to the following equation:

$$\text{Milk protein concentration based on water (\% by weight)} = \frac{P \times L/100}{W + P \times L/100} \times 100$$

wherein W represents the content (% by weight) of water based on the total emulsion; P represents the pure milk protein content (% by weight) in the milk protein containing product(s); and L represents the content of the milk protein-containing products (% by weight) in the total emulsion.

Any acids conventionally used in foods may be employed in the present invention. Examples of these acids are lactic, citric, tartaric, fumaric, succinic, malic, gluconic, acetic, adipic and phytic acids and mixture thereof. Further a compound which can form an acid through hydrolysis in the emulsion, for example, glucono-δ-lactone may be employed.

The above acid(s) are employed in a sufficient amount to obtain a pH value of the emulsion of 4,0 to 6,5. When the emulsion has a pH value of less than 4,0, it may taste too sour as a food. On the other hand, when the pH value thereof exceeds 6,5, some problems including the growth of bacteria and loss of form stability may occur.

The oil droplet size of the oil-in-water type emulsified fat or oil composition of the present invention is generally 10μm or below, preferably 1 to 2μm.

The composition of the present invention may further contain flavoring agent(s) such as fruits, fruit juices, fermented milk, coffee, peanut paste, almond paste, spices, cacao mass, cocoa powder, amino acids or nucleic acids; sourness modifier(s) such as sodium acetate, sodium citrate, sodium malate, sodium tartrate, sodium succinate and sodium fumarate; colorant(s); or pasteurized cereals, beans, vegetables or meats.

A gas such as air or nitrogen may be incorporated into the oil-in-water type emulsified fat or oil composition of the present invention, if required, during or after the production.

The oil-in-water type emulsified fat or oil composition of the present invention may be prepared by, for example, the following process.

When oil-soluble emulsifier(s) are used, said emulsifier(s) are dissolved in 5.0 to 45.0% by weight of fat(s) or oil(s) heated to 50 to 90° C to thereby give an oily phase. Separately milk protein-containing product(s) and water-soluble emulsifier(s), if to be used, are mixed with water to give an aqueous phase. Then the oily phase is added to the aqueous phase and the resulting mixture is preliminarily emulsified to give an oil-in-water emulsion. The preliminary emulsified matter is then homogenized with, for example, a colloid mill, a homomixer or a homogenizer to give a specific oil droplet size. Subsequently the homogenate is pasteurized and cooled to 30° C or below with the use of a device for producing margarine, such as a closed continuous tube refrigerator, a votator, a combinator or a perfector or a plate heat exchanger followed by addition of acid(s) thereto. The acid(s) are preferably added after cooling the emulsion, as described above, in order to achieve stable emulsification. But if the emulsification is stable, the acid(s) may be added before or during cooling of the emulsion.

Thus the oil-in-water type emulsified fat or oil composition of the present invention, which is free from any restrictions on the starting fat(s) or oil(s); shows neither undesirable texture nor poor mouth feel caused by the use of whey separation inhibitor; and is stable in thawing and tasty without containing any whey separation inhibitor such as sugars or gums therein, can be obtained. And further the oil-in-water type emulsified fat or oil composition of the present invention has a good stability and a good flavour, even if it is left at a room temperature (and above 35° C).

To further illustrate the present invention, the following Examples will be given.

Examples 1 to 18 and Comparative Examples 1 to 13

According to each composition (% by weight) in the following Tables 1 and 2, an oil-soluble emulsifier, if used, was dissolved in a fat and/or an oil heated to 70° C to thereby give an oily phase. Separately protein-containing product(s), and a water-soluble emulsifier, if used, and sugars, if used, were mixed with water to give an aqueous phase. Then said oily phase was added to said aqueous phase and the obtained mixture was preliminarily emulsified to give an oil-in-water emulsion. This emulsion was homogenized with a commercially available colloid mill to give an oil droplet size of 1 to 2 μm. Subsequently the homogenate was pasteurized at 90° C with a closed scraping heat exchanger and cooled to 25° C with a closed continuous tubular refrigerator. Then an acid was added thereto under stirring to give an oil-in-water type emulsified fat or oil composition. The properties of the oil-in-water type emulsified fat or oil composition thus obtained were examined. Tables 1 and 2 show the results.

Examination of properties :

(1) pH value
    Determined with a commercially available portable pH meter.
(2) Organoleptic evaluation of whey separation and flavour of unfrozen texture
    ◎ : excellent; ○: good; △: somewhat poor; and X: poor.
(3) Freezing and thawing
    100 g of an oil-in-water type emulsified fat or oil composition was introduced into a three-layer polyethylene film bag and frozen at -20° C overnight. Then it was thawed at 20° C and the whey separation and the presence of aggregates were organoleptically evaluated.
    ◎ : excellent; ○: good; △: somewhat poor; and x : poor.
(4) Left at 35° C
    10 g of an oil-in-water type emulsified fat or oil composition was introduced into a poly-ethylene cup and left at 35° C overnight. Then the whey separation, the presence of aggregates and the stability of form were organoleptically evaluated.
    ◎ : excellent; ○: good; △: somewhat poor; and x : poor.

In the following Tables, *1 to *12 have the following meanings (registered trademarks are acknowledged as such).

*1:     Emulsy MS (mfd. by Riken Vitamin Co., Ltd.) was used.
*2:     Poem SM 302 (mfd. by Riken vitamin Co., Ltd.) was used.
*3:     Ryoto Sugar Ester S 1170 (mfd. by Mitsubishi Chemical food Co., Ltd.) was used.
*4:     Poem L-10 (mfd. by Riken Vitamin Co., Ltd.) was used.
*5:     Emulsy MO (mfd. by Riken Vitamin Co., Ltd.) was used.
*6:     Lecithin (mfd. by Ajinomoto Co., Inc.) was used.
*7:     Ryoto Sugar Ester S 270 (mfd. by Mitsubishi Chemical Food Co., Ltd.) was used.
*8:     Poem K-30 (mfd. by Riken Vitamin Co., Ltd.) was used.
*9:     Protein content : 34.0% by weight.
*10:    Protein content : 2.4% by weight.
*11:    Protein content: 2.9% by weight.
*12:    Protein content: 70.0% by weight.

Tables 1 and 2 indicate the following facts.
Every oil-in-water type emulsified fat or oil composition of the present invention (Example 1 to 14) showed an excellent texture and flavor and no problem in the stability in thawing.
In contrast thereto, an oil-in-water type oil composition containing less than 5% by weight of an oil (Comparative Example 1) had a poor flavor. On the other hand, the one containing more than 45% by weight of a fat (Comparative Example 2) showed a large increase in viscosity after homogenization, which made the subsequent production procedure impossible. Oil-in-water type emulsified oil compositions containing less than 0.1% by weight of an emulsifier (Comparative Examples 3 and 4) showed whey separation before freezing. When these compositions were thawed, not only the whey separation but also the formation of aggregates were observed. An oil-in-water type emulsified oil composition containing more than 3.0% by weight of an emulsifier (Comparative Example 5) had an unsatisfactory flavour. Oil-in-water type emulsified oil compositions prepared with the use of emulsifiers other than those as specified in the present invention (Comparative Examples 6 to 9) causes the whey separation and the formation of aggregates in thawing. One of them (Comparative Example 7)further gave an unsatisfactory flavour. An oil-in-water type emulsified oil composition having a milk protein concentration based on water of less than 7.0% by weight (Comparative Example 10) caused the whey separation in thawing. On the other hand, the one having a milk protein concentration based on water exceeding 18.0% by weight (Comparative Example 11) caused a remarkable increase in viscosity after homogenization, which made the subsequent production procedure impossible. An oil-in-water type emulsified oil composition having a pH value of less than 4.0 (Comparative Example 12) caused the poor-flavour and the whey separation. On the other hand, the one having a pH value of more than 6.5 (Comparative Example 13) caused a poor stability at 35° C,and then the

EP 0 255 660 B2

Table 1

| | | | Example № | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Fat or oil | Palm oil | | 5.0 | | 25.9 | 24.5 | 24.0 | 25.0 | 25.0 | 25.0 | 25.0 | 24.0 | 24.0 | 20.0 | 24.0 | |
| | Rice oil | | | | | | | | | | | | | | | 25.0 |
| | Beef tallow | | | 45.0 | | | | | | | | | | | | |
| Emulsifier | Saturated fatty acid monoglyceride | *1 | 1.0 | 1.0 | 0.1 | 1.5 | 2.0 | 1.0 | | | | 1.0 | 1.0 | 1.0 | 1.0 | 1.0 |
| | Sorbitan fatty acid ester | *2 | | | | | | | 1.0 | | | | | | | |
| | Sucrose fatty acid ester (HLB 11) | *3 | | | | | | | | | 1.0 | | | | | |
| | Lactic acid esters of monoglyceride | *4 | | | | | | | | | | 1.0 | | | | |
| | Unsaturated fatty acid monoglyceride | *5 | | | | | | | | | | | | | | |
| | Soybean lecithin | *6 | | | | | | | | | | | | | | |
| | Sucrose fatty acid ester (HLB 2) | *7 | | | | | | | | | | | | | | |
| | Citric acid esters of monoglyceride | *8 | | | | | | | | | | | | | | |
| Protein-contg. product | Skim milk | *9 | 17.8 | 10.2 | 14.0 | 14.0 | 14.0 | 14.0 | 14.0 | 14.0 | 14.0 | 13.5 | 29.1 | 12.0 | 12.0 | 14.0 |
| | Fresh cream | *10 | | | | | | | | | | | | 25.0 | | |
| | Fresh milk | *11 | | | | | | | | | | | | | 30.0 | |
| | Lactalbumin | *12 | | | | | | | | | | | | | | |
| Water | | | 62.2 | 35.8 | 49.0 | 49.0 | 49.0 | 49.0 | 49.0 | 49.0 | 49.0 | 52.3 | 39.0 | 32.0 | 23.0 | 49.0 |
| Vinegar (acidity 9%) | | | 14.0 | 8.0 | 11.0 | 11.0 | 11.0 | 11.0 | 11.0 | 11.0 | 11.0 | | | | | 11.0 |
| Vinegar (acidity 10%) | | | | | | | | | | | | 9.2 | 6.9 | 10.0 | 10.0 | |
| Citric acid | | | | | | | | | | | | | | | | |
| Sucrose | | | | | | | | | | | | | | | | |
| Protein concn. based on water | | | 8.7 | 8.7 | 8.7 | 8.7 | 8.7 | 8.7 | 8.7 | 8.7 | 8.7 | 7.0 | 18.0 | 7.3 | 7.8 | 8.7 |
| Acidity based on water | | | 1.5 | 1.6 | 1.7 | 1.7 | 1.7 | 1.7 | 1.7 | 1.7 | 1.7 | 1.5 | 1.5 | 1.7 | 1.7 | 1.7 |
| pH | | | 4.8 | 4.7 | 4.6 | 4.6 | 4.6 | 4.6 | 4.6 | 4.6 | 4.6 | 4.8 | 4.8 | 4.8 | 4.8 | 4.6 |
| Unfrozen texture | Whey separation | | ◎ | ◎ | ◎ | ◎ | ◎ | ◎ | ◎ | ◎ | ◎ | O | ◎ | ◎ | ◎ | ◎ |
| | Flavour | | O | O | ◎ | ◎ | ◎ | ◎ | ◎ | ◎ | ◎ | ◎ | O | ◎ | ◎ | ◎ |
| Thawing test | Whey separation | | ◎ | ◎ | O | ◎ | ◎ | ◎ | ◎ | ◎ | ◎ | O | ◎ | ◎ | ◎ | ◎ |
| | Aggregates | | ◎ | ◎ | O | ◎ | ◎ | ◎ | ◎ | ◎ | ◎ | ◎ | O | ◎ | ◎ | ◎ |
| Left at 35°C | Whey separation | | ◎ | ◎ | O | ◎ | ◎ | ◎ | ◎ | ◎ | ◎ | O | ◎ | ◎ | ◎ | ◎ |
| | Aggregates | | ◎ | ◎ | O | ◎ | ◎ | ◎ | ◎ | ◎ | ◎ | ◎ | O | ◎ | ◎ | ◎ |
| | Stability of form | | ◎ | ◎ | O | ◎ | ◎ | ◎ | ◎ | ◎ | ◎ | O | ◎ | ◎ | ◎ | ◎ |

milk

Table 2

| | Comparative Example № | 1 | 2 | 3 | 4 | 5 | 6 | 7 | 8 | 9 | 10 | 11 | 12 | 13 |
|---|---|---|---|---|---|---|---|---|---|---|---|---|---|---|
| Fat or oil | Palm oil | 4.0 | | 26.0 | 25.95 | 22.5 | 25.0 | 25.0 | 25.0 | 25.0 | 24.0 | 24.0 | 25.0 | 25.0 |
| | Rice oil | | | | | | | | | | | | | |
| | Beef tallow | | 47.0 | | | | | | | | | | | |
| Emulsifier | Saturated fatty acid monoglyceride *1 | 1.0 | 1.0 | | 0.05 | 3.5 | | | | | 1.0 | 1.0 | 1.0 | 1.0 |
| | Sorbitan fatty acid ester *2 | | | | | | | | | | | | | |
| | Sucrose fatty acid ester (HLB 11) *3 | | | | | | | | | | | | | |
| | Lactic acid esters of monoglyceride *4 | | | | | | | | | | | | | |
| | Unsaturated fatty acid monoglyceride *5 | | | | | | 1.0 | | | | | | | |
| | Soybean lecithin *6 | | | | | | | 1.0 | | | | | | |
| | Sucrose fatty acid ester (HLB 2) *7 | | | | | | | | 1.0 | | | | | |
| | Citric acid esters of monoglyceride *8 | | | | | | | | | 1.0 | | | | |
| | Skim milk *9 | 18.0 | 9.9 | 14.0 | 14.0 | 14.0 | 14.0 | 14.0 | 14.0 | 14.0 | 12.6 | 29.8 | | |
| Protein contg. product | Fresh cream *10 | | | | | | | | | | 9.4 | | | |
| | Fresh milk *11 | | | | | | | | | | | 6.7 | | |
| | Lactalbumin *12 | | | | | | | | | | | | | |
| | Water | 62.9 | 34.4 | 49.0 | 49.0 | 49.0 | 49.0 | 49.0 | 49.0 | 49.0 | 53.0 | 38.5 | 64.9 | 66.6 |
| | Vinegar (acidity 9%) | 14.1 | 7.7 | 11.0 | 11.0 | 11.0 | 11.0 | 11.0 | 11.0 | 11.0 | | | | |
| | Vinegar (acidity 10%) | | | | | | | | | | | | | |
| | Citric acid | | | | | | | | | | | | 1.6 | 0.02 |
| | Sucrose | | | | | | | | | | | | | |
| | Protein concn. based on water | 8.7 | 8.8 | 8.7 | 8.7 | 8.7 | 8.7 | 8.7 | 8.7 | 8.7 | 6.5 | 18.5 | 7.5 | 7.2 |
| | Acidity based on water | 1.6 | 1.6 | 1.7 | 1.7 | 1.7 | 1.7 | 1.7 | 1.7 | 1.7 | 1.5 | 1.5 | 2.4 | 0.03 |
| | pH | 4.7 | — | 4.6 | 4.6 | 4.6 | 4.6 | 4.6 | 4.6 | 4.6 | 4.8 | — | 3.7 | 6.8 |
| Unfrozen | texture — Whey separation | ○ | — | × | △ | ○ | × | × | × | × | ○ | — | △ | ◎ |
| | Flavour | × | — | ○ | ○ | × | ○ | × | ○ | ○ | △ | — | × | △ |
| Thawing test | Whey separation | ○ | — | × | × | ○ | × | × | × | × | × | — | × | ◎ |
| | Aggregates | ○ | — | × | × | △ | × | × | × | × | ○ | — | × | ◎ |
| Left at 35°C | Whey separation | ○ | — | × | × | ○ | × | × | × | × | × | — | × | ◎ |
| | Aggregates | △ | — | × | × | ○ | × | × | × | × | ○ | — | △ | ◎ |
| | Stability of form | ○ | — | ○ | ○ | ○ | ○ | ○ | ○ | ○ | × | — | ◎ | × |

## Claims

1.  An oil-in-water type fat or oil composition, which comprises 5 to 45% by weight of fat(s) or oil(s), 0.1 to 3.0% by weight of emulsifier(s) selected from among saturated fatty acid monoglycerides, sorbitan fatty acid esters, sucrose fatty acid esters each having an HLB of at least 7 and lactic acid esters of monoglyceride, water, 7.0 to 18.0% by

EP 0 255 660 B2

weight based on the water of milk protein(s) and acid(s) and has a pH value adjusted to 4.0 to 6.5, with the proviso that whey separation inihibitors are excluded.

2. An oil-in-water type emulsified fat or oil composition as set forth in claim 1, wherein said saturated fatty acid monoglycerides comprise saturated fatty acids each having 12 to 22 carbon atoms.

3. An oil-in-water type emulsified fat or oil composition as set forth in claim 1, wherein said sorbitan fatty acid esters and said sucrose fatty acid esters comprise fatty acids each having 12 to 22 carbon atoms, in particular, saturated fatty acids each having 12 to 22 carbon atoms.

4. An oil-in-water type emulsified fat or oil composition as set forth in claim 1, which comprises 0.5 to 2.0% by weight of said emulsifier(s).

5. An oil-in-water type emulsified fat or oil composition as set forth in claim 4, wherein said milk protein(s) are incorporated in the form of milk protein-containing product(s) such as whole fat milk powder, skim milk powder, fresh cream, skim milk, fresh milk, concentrated skim milk, concentrated milk, butter milk powder, butter milk, lactalbumin, calcium caseinate, sodium caseinate, or mixtures thereof.

6. An oil-in-water type composition as set forth in calm 1, which comprises 8.0 to 16.0% by weight based on the water of said milk protein(s).

**Patentansprüche**

1. Fett- oder Ölzusammensetzung vom Öl-in-Wasser-Typ, die 5 bis 45 Gew.-% Fett(e) oder Öl(e), 0,1 bis 3,0 Gew.-% Emulgator(en), ausgewählt aus gesättigten Fettsäuremonoglyceriden, Sorbitanfettsäureestern, Saccharosefettsäureestern, die jeweils einen HLB-Wert von mindestens 7 aufweisen, und Milchsäureestern von Monoglycerid, Wasser, 7,0 bis 18,0 Gew.-%, bezogen auf das Wasser, Milchprotein(e) und Säure(n) umfaßt und einen auf 4,0 bis 6,5 eingestellten pH-Wert aufweist, mit der Maßgabe, daß Molkeabsonderungs-Inhibitoren ausgeschlossen sind.

2. Emulgierte Fett- oder Ölzusammensetzung vom Öl-in-Wasser-Typ nach Anspruch 1, wobei die gesättigten Fettsäuremonoglyceride gesättigte Fettsäuren mit jeweils 12 bis 22 Kohlenstoffatomen umfassen.

3. Emulgierte Fett- oder Ölzusammensetzung vom Öl-in-Wasser-Typ nach Anspruch 1, wobei die Sobitanfettsäureester und die Saccharosefettsäureester Fettsäuren mit jeweils 12 bis 22 Kohlenstoffatomen, insbsesondere gesättigte Fettsäuren mit jeweils 12 bis 22 Kohlenstoffatomen umfassen.

4. Eine emulgierte Fett- oder Ölzusammensetzung vom Öl-in-Wasser-Typ nach Anspruch 1, die 0,5 bis 2,0 Gew.-% des Emulgators bzw. der Emulgatoren enthält.

5. Emulgierte Fett- oder Ölzusammensetzung vom Öl-in-Wasser-Typ nach Anspruch 4, wobei das (die) Milchprotein(e) in Form eines Milchprotein enthaltenden Produkts bzw. Produkten, wie Vollmilchpulver, Magermilchpulver, frische Sahne, Magermilch, frische Milch, Magermilchkonzentrat, Milchkonzentrat, Buttermilchpulver, Buttermilch, Lactalbumin, Calciumkaseinat, Natriumkaseinat oder deren Gemische, enthalten ist (sind).

6. Fett oder Ölzusammensetzung vom Öl-in-Wasser-Typ nach Anspruch 1, die 8,0 bis 16 Gew.-% des Milchproteins bzw. der Milchproteine, bezogen auf das Wasser, umfaßt.

**Revendications**

1. Composition de graisse ou d'huile du type huile-dans-eau, qui comprend 5 à 45 % en poids de graisse(s) ou d'huile(s), 0,1 à 3,0 % en poids d'émulsifiant(s) choisi(s) parmi les monoglycérides d'acide gras saturé, les esters d'acide gras et de sorbitane, les esters d'acide gras et de saccharose, chacun ayant un HLB d'au moins 7, et les esters d'acide lactique et de monoglycéride, de l'eau, 7,0 à 18,0 % en poids, sur la base de l'eau, de protéine(s) de lait et d'acide(s), et qui a une valeur de pH ajustée de 4,0 à 6,5, avec la condition que des inhibiteurs de séparation du petit-lait soient exclus.

2. Composition de graisse ou d'huile émulsifiée du type huile-dans-eau selon la revendication 1, dans laquelle lesdits monoglycérides d'acide gras saturé comprennent des acides gras saturés comportant chacun de 12 à 22 atomes de carbone.

8

3. Composition de graisse ou d'huile émulsifiée du type huile-dans-eau selon la revendication 1, dans laquelle lesdits esters d'acide gras et de sorbitane et lesdits esters d'acide gras et de saccharose comprennent des acides gras comportant chacun de 12 à 22 atomes de carbone, en particulier, des acides gras saturés comportant chacun de 12 à 22 atomes de carbone.

4. Composition de graisse ou d'huile émulsifiée du type huile-dans-eau selon la revendication 1, qui comprend 0,5 à 2,0 % en poids dudit/desdits émulsifiant(s).

5. Composition de graisse ou d'huile émulsifiée du type huile-dans-eau selon la revendication 4, dans laquelle ladite/lesdites protéine(s) de lait est/sont incorporée(s) sous la forme de produit(s) contenant une/des protéine(s) de lait tels que du lait en poudre entier, du lait en poudre écrémé, de la crème fraîche, du lait écrémé, du lait frais, du lait écrémé concentre, du lait concentré, du babeurre en poudre, du babeurre, de la lactalbumine, du caséinate de calcium, du caséinate de sodium, ou leurs mélanges.

6. Composition du type huile-dans-eau selon la revendication 1, qui comprend de 8,0 à 16,0 % en poids, sur la base de l'eau, de ladite/desdites protéine(s) de lait.